Europäisches Patentamt

European Patent Office

Office européen des brevets

(11) Publication number: **0 326 088**
**A2**

# EUROPEAN PATENT APPLICATION

(21) Application number: 89101225.4

(22) Date of filing: 25.01.89

(51) Int. Cl.⁴: **H01F 7/02** , **H02K 23/04**

(30) Priority: 29.01.88 US 149728
11.01.89 US 295371

(43) Date of publication of application:
02.08.89 Bulletin 89/31

(84) Designated Contracting States:
AT CH FR IT LI SE

(71) Applicant: KOLLMORGEN CORPORATION
66 Gatehouse Road
Stamford Connecticut 06902(US)

(72) Inventor: Hassell, Gavin G.
112 Givens Lane
Blacksburg, VA 24073(US)
Inventor: Layne, Kevin E.
170 Gibson Drive, N.W.
Christiansburg, VA 24073(US)
Inventor: Mabie, John H.
600 7th Street
Radford, VA 24141(US)
Inventor: Snuffer, Daniel H.
1145 Hans Meadows Road
Christiansburg, VA 24073(US)

(74) Representative: Königseder, geb. Egerer,
Claudia
Zugspitzstrasse 65
D-8104 Grainau(DE)

(54) Neodymium-boron-iron magnet assembly and method of making same.

(57) There is provided a method of preparing and bonding neodymium-boron-iron magnets in a motor field assembly. In the preferred embodiment, the neodymium-boron-rion magnet material is cleaned and then neutralized and coated in a zinc phosphate process. Advantageously, the zinc phosphate neutralizes surface effects of contaminants and provides a relatively large surface area having numerous mechanical interlocking sites receptive to adhesives and coatings. The zinc phosphate coated magnet is bonded to a substrate using a flexible epoxy adhesive. In the preferred embodiment a durable, corrosion resistant coating such as amide imide is applied to the exposed, non-bonded surfaces of the coated magnet.

The resulting structure is a magnet 10 coated on all sides with a zinc phosphate coating 12, bonded on one side thereof by a flexible epoxy adhesive 14 to a substrate 16 and coated on the remaining sides

thereof with a protective amide imide layer 18.

FIG.1

# NEODYMIUM-BORON-IRON MAGNET ASSEMBLY AND METHOD OF MAKING SAME

The invention relates to bonding and protecting magnets, and more specifically neodymium-boron-iron magnets, in motor field assemblies.

Neodymium-boron-iron· magnets have recently found application in electric motor field assemblies. When used in this environment, however, neodymium-boron-rion magnets must be protected from corrosion. Known methods of protecting such magnets include cadmium or nickel plating. It has, however, now been found that such plating processes do not provide adequate corrosion protection. Indeed, in some cases such plating processes actually contribute to corrosion problems. A further problem with neodymium-boron-iron magnets in motor field assemblies is that this magnet material possesses a negative coefficient of thermal expansion in the plane perpendicular to the axis of magnet orientation. Since motor assemblies must operate over a wide thermal range, a neodymium-boron-iron magnet can experience thermal expansion far different than the substrate, usually iron, to which it is attached.

The effects of corrosion and thermal expansion have been found to cause neodymium-boron-iron magnets to break loose from the motor field assembly as the motor is temperature cycled. In such cases, the corroded magnets simply cannot withstand the large difference in thermal expansion between the magnet material and the field assembly substrate. Since the corroded magnet surface layer can no longer support the large stress gradient at the bond interface, the magnet fractures along the bond surface and is lost within the motor. Naturally, this detracts from or inhibits motor performance.

Threrefore, it is an object of the invention to prevent magnets from breaking loose in motor field assemblies.

It is another object of the invention to provide adequate corrosion protection for neodymium-boron-iron magnets in motor field assemblies.

It is a further object of the invention to prevent thermal expansion effects from causing neodymium-boron-iron magnets to fracture and/or break free in motor field assemblies. These and other highly desirable and unusual results are accomplished by the structure and method in accordance with this invention in a reliable, cost-effective manner so that the full advantages of neodymium-boron-iron magnets may be realized in motor field assemblies.

In accordance with the invention, there is provided a method of making as assembly including at least one neodymium-boron-iron magnet comprising the steps of cleaning the magnet in an alkaline solution, rinsing it in water, then in an acidified rinse solution, and finally in water; coating the cleaned magnet with a zinc phosphate containing solution to form a protective layer of zinc phosphate thus inhibiting corrosive surface effects; rinsing the zinc phosphate coated magnet with a chromic acid containing solution; and bonding the cleaned, zinc phosphate coated, rinsed and dried magnet to a substrate with an adhesive. In a preferred embodiment, there is provided a method of making a motor field assembly including the at least one neodymium-boron-iron magnet comprising the steps of cleaning the magnet in an alkaline solution; rinsing the cleaned magnet in water, then in an acidic rinse solution, and finally in water; treating the cleaned, rinsed magnet in a zinc phosphate containing bath to form a protective layer of zinc phosphate to inhibit corrosive surface effects; rinsing the coated magnet in water and then in a chromic acid containing solution; drying the rinsed, coated magnet; and bonding the dried magnet to a motor field assembly substrate with a flexible adhesive.

The treatment and coating solutions used in accordance with the invention neutralize the surface effects of any contaminants, e.g. free chlorine ions. The preferred neutralizing solutions are incorporated in a zinc phosphate process. Advantageously, the preferred zinc phosphate process not only neutralizes corrosion effects but also coats the magnet to form a surface which is very receptive to coatings and adhesives. Indeed, the zinc phosphate coating increases surface area and provides extensive sites for mechanical interlocking of coatings and/or adhesives. A flexible epoxy adhesive is used to bond the properly cleaned, zinc phosphate coated magnet surface to a clean motor field substrate such as an iron stator assembly. Advantageously, the flexible adhesive forms a strong bond with the zinc phosphate treated magnet, while also accommodating the great difference between the thermal expansion characteristics of the magnet and substrate.

In a preferred embodiment a further coating layer of durable, corrosion-resistant material is applied to the exposed surfaces of the coated neodymium-boron-iron magnet, i.e., the surfaces other than the bonding surface. Surprisingly, amide imide has beeen found to be particularly useful in this application as a corrosion resistant material. This layer may be applied to the coated magnet by brushing or spraying the amide imide onto the coated magnets prior to bonding the malgnet to the substrate, taking care to avoid application of the amide imide to the bonding surface. Alternatively, the amide imide may be applied after the magnet has been bonded to the substrate, eliminating the need to mask or otherwise protect the bonding surface.

The method of this invention remarkably provides a neodymium-boron-iron magnet assembly capable of enduring the wide variation in temperatures and corrosive chemicals found in the environment of motor field assemblies. Surprisingly, this remarkable result is obtained in a straight-forward and effective manner by treating the magnets in a neutralizing solution, preferably zinc phosphate, in order to neutralize corrosive effects on the magnet surface and form a protective coating having a surface receptive to adhesives and coatings. Advantageously, the treated magnet surface obtains a high degree of mechanical interlocking with the preferred flexible adhesive used to bond the magnet to the substrate. Remarkably, however, the flexible adhesive retains sufficient flexibility to withstand and com pensate for the great stress resulting from the difference in thermal expansion coefficients of the magnet and substrate materials.

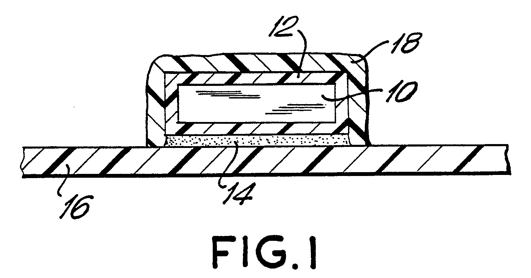

The Figure illustrates, in enlarged cross section, a motor field assembly in accordance with the preferred embodiment of the invention showing all layers and coatings.

Magnet 10 is coated with the neutralizing and coating layer 12 and the flexible adhesive 14 bonds the coated magnet 10 to the substrate 16. In a preferred embodiment, a durable corrosion resistant coating layer 18 covers the exposed surfaces of the coated magnet 10. More specifically, a neodymium-boron-iron magnet 10 has a zinc phosphate coating 12 and is bonded to an iron stator assembly 16 by a flexible epoxy adhesive 14. The exposed zinc phosphate coated surfaces of the magnet are preferably coated with an amide imide coating layer 18.

In the process of the invention, neodymium-boron-iron magnets are treated and coated in a neutralizing and coating solution, preferably a zinc phosphate solution, and bonded to a substrate with a flexible adhesive. Thereafter, a durable corrosion-resistant coating layer is applied to provide further corrosion protection.

Neodymium-boron-iron magnets may be received in block form and thereafter cut into desired sizes and configurations. Such magnets may be magnetized or unmagnetized during processing and it should be understood that reference herein to 'magnets' is for convenience only and should not be construed as a limitation on the invention.

The magnets are cleansed and treated to neutralize the corrosive surface effects of contaminants, e.g. any free chlorine ions. In practice, the magnet material is cleaned by successively treating the magnets in an alkaline bath, a water rinse, a sulfuric acid bath and a second water rinse. At present, the preferred alkaline bath is prepared with 142 g to 200 g of Oakite No. 195® per 3,6 l of water and 85 g to 142 g of Oakite No. 90® per 3,6 l of water. Oakite 195® is an inhibited alkaline, reverse current electrocleaner for zinc and other metals. It is a moderately hygroscopic white powder with no odor, a bulk density of 1152 g/l and a maximum solubility of 90 g/l at 21° C. It precipitates in hard water. The pH at working concentrations of 37.5 to 60 g/l of water is 13,0 to 13,2.

Oakite 90® is a powdered alkaline material designated to anodically remove smut, oil and other shop soils from steel and copper prior to plating. It is a blend of anionic and nonionic surfactants and alkalies including caustic soda, silicates, and phosphates. It is a hygroscopic white powder with a faint aromatic odor. Its maximum solubility is up to 60 g/l at 21° C and 120 g/l at 82° C. It flocculates in hard water. The pH at working concentrations of 45 g/l at 21° C is 13.2.

The cleaning process is effected by rinsing the magnet material for 10 to 15 seconds in water at tap temperature, e.g. approximately 13° C (hereinafter referred to as a "cold water rinse"), and immersing the magnet in the alkaline bath. The magnet in the alkaline bath is held cathodic for 5 to 10 seconds and switched to anodic for 5 to 10 seconds. Thereafter, the magnet material is given a cold water rinse for 10 to 15 seconds and immersed in sulfuric acid, e.g. approximately 0,7 molar, for about 5 seconds. The magnet material is then given another cold water rinse for 10 to 15 seconds.

So cleaned, the magnet material is in condition for treatment in the neutralizing and coating solution. This solution, which is preferably a zinc phosphate solution, neutralizes the surface effects of contaminants, protects the magnet material, and forms a coated surface receptive to bonding agents and coatings. The preferred zinc phosphate solution contains approximately 4 to 5% by volume zinc phosphate and is maintained at an elevated temperature in the range of from 88° C to 96° C. During processing the magnet material is immersed in the neutralizing and coating solution for approximately 15 to 30 minutes. The preferred zinc phosphate solution is made from Cryscoat ZS 400® and is prepared as a 'heavy' coating solution, e.g. 6,6 g to 50 g per m².

The chemical composition of Cryscoat ZS 400® is nitric acid, hydrofluoric acid and heavy metal phosphates. It is a light green solution with an acid odor, a specific gravity of 1,423 at 20° C, bulk density of 1423 g/k at 20° C, viscosity of 9 to 10 cps (Brookfield spindle 1, 60 rpm) at 20° C.

The neutralized and coated magnet material is given a cold water rinse for about 1 minute. Preferably, the coated magnet material is then immersed in an acidified rinse containing, for example, approximately 20% chromic acid and 3,1 ml/l nitric acid.

The acidified rinse solution has a pH of 0,8 to 2,0 and is maintained at 15°C to 43°C. Preferably, the coated magnet material remains in the acidified rinse solution for 5 to 30 seconds. One appropriate acidified rinse is Iridite 8P Blubrite®, a concentrated powder which contains chromium compounds. It is mixed with water and nitric acid to make a working solution.

After the acidified rinse the magnet material is given a warm water rinse (38°C to 43°C) and is dried, yielding a zinc phosphate coated magnet.

In accordance with the preferred embodiment, the zinc phosphate coated magnet is bonded to the motor field assembly substrate, e.g. an iron stator, using a flexible epoxy adhesive, which should have a broad effective operating temperature corresponding to the temperature cycle which will be experienced during motor operation and must be compatible with the materials to be bonded. The preferred flexible adhesive is Scotchweld 2214 Hi-flex® having a desirable effective operating temperature ranging from about -24°C to over 150°C. Of course, the surface to be bonded must be clean and free of all grease. In practice, ethyl alcohol has proven effective for cleaning the zinc coated magnet surface and the substrate surface prior to the application of the flexible adhesive.

Due to the relatively large surface area and numerous mechanical interlocking sites of the zinc phosphate coating the flexible epoxy forms a strong bond between the coated magnet surface and the substrate. Advantageously, however, the flexible adhesive accommodates the difference between the coefficients of thermal expansion for the substrate and magnet materials. The combination of the strong bonds formed with each surface, together with the flexibility of the adhesive, enables the system to withstand the great stresses experienced during thermal expansion and/or contraction of the materials.

It is contemplated that shaping may be necessary to conform the magnets to the desired motor shape. This may be accomplished by grinding the magnets. As in the case of magnetization, this step may be performed either before or after the magnets are bonded to the stator. For convenience, it is here assumed that the magnets are shaped after bondding to the stator. Care must be taken to prevent overheating of the magnets during grinding, but it is also important to minimize exposure to any chlorine-containing coolants.

Assuming that the magnets have been shaped by grinding, at least a portion of the zinc phosphate coating will be damaged or destroyed. Therefore, it is necessary to selectively reapply the zinc phosphate neutralizing treatment and coating to the shaped magnet. Where the magnet is ground prior to bonding, it may simply be treated using the immersion technique and related rinses previously described. Indeed, under these circumstances, it may be desirable to grind the magnets prior to any processing in accordance with the invention.

Where the magnet is ground while attached to the stator, it has been found convenient to selectively re-apply the zinc phosphate coating using a brush or spray technique. In practice, the ground magnet surface is rinsed in warm water and cleaned with ethyl alcohol prior to application of the zinc phosphate at an elevated concentration on the order of 10% by volume Cryscoat®. An elevated concentration has been used to compensate for the apparently shorter solution contact time attained using brush or spray rather than immersion coating techniques. However, experience with the invention may reveal that the higher solution concentration is unnecessary.

After re-applying the zinc phosphate, the cold water and acidified rinses are carried out, also using a brush or spray technique. The treated magnet is then air dried. The magnets thus treated, coated and bonded to the substrate are effectively protected from corrosion and the stresses of thermal expansion and, in many applications, may be used in this state. However, as an additional measure of protection it has been found desirable to apply a layer of a durable, corrosion-resistant material over the exposed surfaces of the zinc phosphate coated magnets. Advantageously, the relatively large surface area and numerous mechanical interlocking sites of the zinc phosphate coated surfaces render those surfaces very receptive to such a coating. In accordance with the invention, it has been found that amide imide performs surprisingly well as a corrosion inhibitor and is sufficiently durable to withstand harsh motor environments. Preferably, the receiving surfaces are preheated to a temperature in excess of 93°C prior to application. Brush or spray techniques may be used to obtain a coating having a desired thickness in the range of 12,5 to 37,5 $\mu$m.

It will readily be appreciated that numerous variations from and refinements to the foregoing description may be made without departing from the principles of the invention. In particular, all concentrations, times and techniques are provided by way of example only and should not be construed as requirements for practicing the invention.

In addition, the particular order of process steps is not critical and may be varied depending upon preference and/or manufacturing considerations. By way of example, in accordance with the preferred embodiment it is contemplated that magnets might be cleaned, treated and coated with zinc phosphate, bonded to the stator substrate, ground to the desired configuration, touched-up with zinc phosphate, magnetized and coated with amide imide in that order. Alternatively, it is contemplated that the magnets could be ground and magnetized prior to any processing, thereby eliminating any need for the zinc phosphate touch-up. It is also contemplated that the magnets might be ground, touched-up with zinc phosphate and coated with amide imide on all but the bonding surface prior to bonding the magnet to the substrate.

## Claims

1. A method of making an assembly including at least one neodymium-boron-iron magnet, comprising the steps of
- cleaning the magnet in an alkaline solution, rinsing it in water, then in an acidified rinse solution, and finally in water;
- coating the cleaned magnet with a zinc phosphate containing solution to form a protective layer of zinc phosphate thus inhibiting corrosive surface effects; - rinsing the zinc phosphate coated magnet with a chromic acid containing solution; and
- bonding the cleaned, zinc phosphate coated, rinsed and dried magnet to a substrate with an adhesive.

2. A method of making a motor field assembly including at least one neodymium-boron-iron magnet, comprising the steps of
- cleaning the magnet in an alkaline solution;
- rinsing the cleaned magnet in water, then in an acidic rinse solution, and finally in water;
- treating the cleaned, rinsed magnet in a zinc phosphate containing bath to form a protective layer of zinc phosphate to inhibit corrosive surface effects;
- rinsing the coated magnet in water and then in a chromic acid containing solution;
- drying the rinsed, coated magnet; and
- bonding the dried magnet to a motor field assembly substrate with a flexible adhesive.

3. The method of claim 1 or 2 wherein the adhesive comprises a flexible epoxy resin.

4. The method of claim 1 or 2 wherein the adhesive has an operating range of from -15° to over 150° C.

5. The method of claim 1 or 2 further comprising the step of applying an additional, protective layer to all surfaces of said magnet other than the surface to be bonded or bonded to said substrate.

6. The method of claim 5 wherein the second, protective coating comprises an amide imide resin.

7. The method of claim 1 or 2 wherein the rinsing step or steps is or are performed in water of 10° C to 15° C.

8. The method of claim 1 or 2 wherein the treatment in the alkaline solution comprises maintaining the magnet cathodic for 5 to 10 seconds and then anodic for 5 to 10 seconds.

9. The method of claim 1 or 2 wherein the acidified rinse solution is a 0,7 molar sulfuric acid solution, and the treatment time is 5 seconds.

10. The method of claim 1 or 2 wherein the zinc phosphate containing solution contains 4 to 5% by volume zinc phosphate.

11. The method of claim 1 or 2 wherein the zinc phosphate treatment step is performed at a temperature of 85° C to 96° C.

12. The method of claim 1 or 2 further comprising the step of rinsing the magnet in water at 35° C to 45° C after the treatment step in the chromic acid comprising solution and prior to the drying step.

13. The method of claim 1 or 2 wherein the chromic acid treatment step is carried out for 5 to 30 seconds in a solution containing about 20% chromic acid and 3,1 ml/l of nitric acid and at a pH of 0,8 to 2,0.

14. The method of claim 1 or 2 further comprising an initial solvent treatment decreasing step.

15. The method of claim 14 wherein the solvent treatment is carried out with ethyl alcohol.

16. A motor field assembly comprising a substrate and at least one neodymium-boron-iron magnet, characterized in that the magnet is treated in accordance with the method as claimed in one or more of claims 2 to 15.

17. A motor field assembly comprising a substrate and at least one neodymium-boron-iron magnet, characterized in that the cleaned magnet is provided with a zinc phosphate layer treated with a chromic acid comprising solution.

18. The motor field assembly of claim 17 characterized in that the magnet is bonded to the substrate with a flexible resin.

19. The motor field assembly of claim 17 or 18 characterized in that all surfaces of the magnet except the surface bonded to the substrate are provided with an additional, corrosion resistant coating.

20. The motor field assembly of claim 19, characterized in that the additional coating is an amide imide layer.

FIG.1